# EUROPÄISCHE PATENTANMELDUNG

(11) **EP 1 522 931 A1**
(43) Veröffentlichungstag der Anmeldung: **13.04.2005**
(21) Anmeldenummer: 03022694.8
(22) Anmeldetag: 07.10.2003
(51) Int. Cl.: G06F 17/30

(54) **Verfahren und System zum Suchen und Recherchieren von einem Suchbegriff betreffenden Dokumenten innerhalb eines Datenraums**

(71) Anmelder: Cogisum Intermedia AG, 61348 Bad Homburg (DE)
(72) Erfinder: Reuter, Thomas, 35037 Marburg (DE); Meik, Frank, Dr., 61350 Bad Homburg (DE)
(74) Vertreter: Rupp, Christian, Dipl.Phys.

(57) **Zusammenfassung**

Bei einem Verfahren und einem System zum Suchen und Recherchieren von mindestens einen vorgegebenen Suchbegriff betreffenden Dokumenten (17, 18) innerhalb eines Datenraums (15, 16), werden der Datenraum (15, 16) zunächst nach Dokumenten (17, 18) durchsucht und Informationen hinsichtlich der Quellen der Dokumente (17, 18) sowie deren Inhalte in einer Datenbank (4) gespeichert. Nach der Eingabe eines Suchbegriffs werden anhand der in der Datenbank (4) enthaltenen Informationen diejenigen Dokumente (17, 18), welche den Suchbegriff beinhalten bzw. betreffen, erfaßt und zumindest ein Teil der erfaßten Dokumente (17, 18) einem Benutzer zur Verfügung gestellt. Zur Aktualisierung der Datenbank (4) werden zumindest einige Quellen des Datenraums (15, 16) wiederholt nach Dokumenten (17, 18) durchsucht, wobei die Durchsuchungsfrequenz von der Aktualisierungsfrequenz der Quellen abhängt. Ferner können zu jedem Dokument (17, 18) ein dessen Herkunft berücksichtigender Qualitätswert und/oder eine Zusammenfassung erstellt werden, die ebenfalls ausgegeben werden.

## Beschreibung

Die vorliegende Erfindung betrifft ein Verfahren sowie ein System zum Suchen und Recherchieren von mindestens einen vorgegebenen Suchbegriff betreffenden Dokumenten innerhalb eines Datenraums, beispielsweise innerhalb des Internets. Darüber hinaus betrifft die Erfindung ein Verfahren sowie ein Programm zum Erstellen und Aktualisieren einer Datenbank, welche zur Verwendung mit einer Suchmaschine zum Suchen und Recherchieren von Dokumenten innerhalb eines Datenraums vorgesehen ist.

Die in Daten- und Kommunikationsnetzen zur Verfügung stehenden und abrufbaren Informationen haben in den letzten Jahren dramatisch zugenommen. Betroffen davon sind zum einen lokale Netzwerke, beispielsweise firmen- oder universitätsinterne Netze, sowie insbesondere das Internet, über das ein unüberschaubares Potential an digitalisiertem Wissen zur Verfügung steht. Da es sich hierbei um einen verhältnismäßig jungen, dynamischen und noch wenig standardisierten Markt handelt, ist zwischenzeitlich ein enormes Volumen an Dokumenten und Textmaterial entstanden, das allerdings überwiegend unstrukturiert zur Verfügung steht. Insbesondere das Internet als ein offenes und jedem frei zugängliches Medium stellt eine Informationsquelle mit einem extrem hohen Potential dar, das leider aufgrund der nur unzureichenden Struktur für die zur Verfügung gestellten Daten, welche keine festen Regeln zum Auffinden von Informationen bietet, größtenteils ungenutzt ist.

Um daher im Internet gewünschte Informationen finden zu können, ist der Einsatz sogenannter Suchmaschinen unerläßlich. Diese stellen nach der Eingabe eines oder mehrerer Suchbegriffe eine Liste von Dokumenten zur Verfügung, welche den bzw. die Suchbegriffe beinhalten. Bekannte Suchmaschinen für das Internet sind beispielsweise Google, Yahoo und Lycos.

Zentrales Element jeder Suchmaschine ist eine Datenbank, in der Informationen hinsichtlich der in dem Datenraum angebotenen Daten bzw. Dokumente gespeichert sind. Da die im Internet zur Verfügung stehende Datenmenge zu umfangreich ist, würde eine erst auf die Eingabe eines Suchbegriffes hin gestartete Suche nach verfügbaren Dokumenten zu viel Zeit in Anspruch nehmen. Um dieses Problem zu umgehen, müssen bereits vorab Informationen hinsichtlich der zur Verfügung stehenden Dokumente gesammelt werden, die dann mit einem verhältnismäßig geringen Aufwand zur Beantwortung des Suchbefehls ausgewertet werden können.

Aus diesem Grund ist es üblich, die in dem Datenraum zur Verfügung stehenden Dokumente bereits vorab zu durchsuchen und die hierbei gewonnenen Informationen in einer Datenbank abzuspeichern. Die Datenbank selbst erhält dann lediglich Informationen hinsichtlich der Quelle oder Adresse des Dokuments sowie dessen Inhalts, wobei diese Informationen nach der Eingabe eines Suchbegriffs sehr schnell ausgewertet werden können. Beispielsweise handelt es sich bei den in der Datenbank gespeicherten Informationen bezüglich des Inhalts eines Dokuments um mehrere Suchbegriffe oder Stichwörter, die in dem Dokument enthalten sind. Dieses vorsorgliche Durchsuchen des Internet und Speichern der Informationen zur Aktualisierung der Datenbank erfolgt dabei über automatisierte Programme, sogenannte Crawler oder Spinnen, die selbständig Informationsquellen, also Websites kontaktieren und die von diesen Quellen zur Verfügung gestellten Dokumente durchsuchen.

Auch wenn die Suche nach solchen Dokumenten, die einen gewünschten Suchbegriff beinhalten, für eine erfolgreiche Recherche im Internet unerläßlich ist, so stellt dies doch lediglich einen ersten Schritt beim Recherchieren nach gewünschten Informationen dar. Da die Anzahl der im Internet zur Verfügung stehenden Dokumente extrem groß ist, ist davon auszugehen, dass mit Hilfe der in der Datenbank enthaltenen Informationen eine Vielzahl von Dokumenten erfasst wird, die den gewünschten Suchbegriff beinhalten. Ausnahmen hiervon bestehen allenfalls für einige spezielle Suchbegriffe. Unter den erfassten Dokumenten wird sicherlich auch ein Teil sein, der den gewünschten Suchbegriff lediglich beiläufig oder zufällig enthält und das Themengebiet, in dem der Benutzer der Suchmaschine Informationen zu finden hofft, gar nicht betrifft. Die Problematik besteht deshalb in erster Linie darin, aus der Gruppe der den Suchbegriff enthaltenen Dokumente diejenigen zu identifizieren oder zu filtern, die für den Benutzer auch tatsächlich relevant sind.

Eine erste Möglichkeit, die Anzahl der aufgefundenen Dokumente zu reduzieren und damit ein für den Benutzer hilfreicheres Suchergebnis zu schaffen, besteht darin, die Suche durch die Verwendung weiterer Suchbegriffe sowie durch den Einsatz logischer Operatoren (UND, ODER) zu verfeinern. Dies erfordert allerdings eine gewisse Erfahrung im Umgang mit den Suchmaschinen, da es ausschließlich dem Benutzer überlassen bleibt, geeignete Suchbegriffe und Operatoren zu wählen.

Eine zweite Möglichkeit, die beispielsweise in der internationalen Anmeldung WO 03/005235 A1 der Anmelderin beschrieben ist, besteht darin, die den Suchbegriff enthaltenden Dokumente in verschiedene Kategorien bzw. Themengebiete einzuordnen. Nach der Eingabe eines Suchbegriffs stellt das System dann dem Benutzer zunächst eine Auflistung derjenigen Themengebiete zur Verfügung, zu denen Dokumente, die den gewünschten Suchbegriff beinhalten, gefunden wurden. Nach Auswahl eines den Benutzer interessierenden Themengebiets, die ggf. menügeführt in mehreren Stufen erfolgen kann, wird dem Benutzer dann letztendlich eine Liste der das ausgewählte Themengebiet betreffenden Dokumente zur Verfügung gestellt.

Durch die zuletzt erwähnte Kategorisierung der Dokumente in verschiedene Themengebiete wird dem Benutzer zwar bereits eine wesentliche Hilfestellung bei der Suche nach ihn interessierenden Informationen geboten, ebenso wie bei der erstgenannten Variante, in der er die Recherche ausschließlich mit der Hilfe von weiteren Suchbegriffen und logischen Operatoren vereinfachen kann, gibt das System allerdings letztendlich eine Liste von Dokumenten aus, welche den Suchbegriff enthalten. Dem Benutzer bleibt es schließlich überlassen, aus der zur Verfügung gestellten Liste ein oder mehrere Dokumente auszuwählen, die er näher betrachten möchte. Als Anhaltspunkt hierfür dient ihm beispielsweise die Adresse der das Dokument zur Verfügung stellenden Datenquelle bzw. Website. Ferner wird beispielsweise bei Google neben der Dokumentenadresse auch ein kurzer Auszug des Dokuments dargestellt.

Ein wesentliches Kriterium für die Qualität einer Suchmaschine ist neben der Art und Weise der Darstellung der gefundenen Dokumente die Aktualität der zur Verfügung gestellten Informationen. Da - wie bereits erwähnt - das Suchergebnis lediglich auf den in der Datenbank enthaltenen Informationen beruht, ist für die Qualität einer Suchmaschine vorwiegend ausschlaggebend, wie aktuell die in der Datenbank enthaltenen Informationen sind.

Der vorliegenden Erfindung liegt die Aufgabe zugrunde, die bislang bekannten Verfahren und Systeme zum Recherchieren von Dokumenten innerhalb eines Datenraums derart weiterzuentwickeln, dass den oben genannten Problemen Rechnung getragen wird. Dabei sollen es die bei der Ausgabe oder Anzeige der den Suchbegriff enthaltenen Dokumente zur Verfügung gestellten Informationen dem Benutzer erleichtern, aus der Liste der angezeigten bzw. angebotenen Dokumente dasjenige Dokument auszuwählen, das mit größtmöglicher Wahrscheinlichkeit die von ihm gesuchten Informationen enthält. Eine weitere Aufgabe der vorliegenden Erfindung besteht ferner darin, die von dem Recherchen- bzw. Suchsystem genutzte Datenbank auf einem möglichst aktuellen Stand zu halten.

Die oben genannte Aufgabe wird durch die in den unabhängigen Ansprüchen bezeichnete Erfindung gelöst.

Ein erster Aspekt der vorliegenden Erfindung betrifft dabei ein Verfahren zum Erstellen und Aktualisieren einer Datenbank, die zur Verwendung mit einer Suchmaschine zum Suchen und Recherchieren von mindestens einen vorgegebenen Suchbegriff betreffenden Dokumenten innerhalb eines Datenraums vorgesehen ist, wobei der Datenraum nach Dokumenten durchsucht wird und Informationen hinsichtlich der Quellen sowie der Inhalte der Dokumente in der Datenbank gespeichert werden. Um die Datenbank auf einem möglichst aktuellen Stand zu halten werden erfindungsgemäß zumindest einige Quellen des Datenraums wiederholt nach Dokumenten durchsucht, wobei die Durchsuchungsfrequenz von der Aktualisierungsfrequenz der Quellen abhängt.

Erfindungsgemäß werden somit im Falle des Internet sich häufig ändernde bzw. häufig aktualisierte Webseiten regelmäßig durchsucht, um die Datenbank auf dem aktuellsten Stand zu halten. Selbst sogenannte News-Seiten von Magazinen und Nachrichtenanbietern, die in kurzen Zeitabständen neue Informationen zur Verfügung stellen, können auf diese Weise erfasst und von der Suchmaschine berücksichtigt werden. Damit ist sichergestellt, dass auch erst seit kurzer Zeit zur Verfügung stehende Informationen bei einer Internet-Recherche berücksichtigt werden und dem Benutzer der Suchmaschine zur Verfügung stehen.

Vorzugsweise wird die Durchsuchungsfrequenz automatisch an die Aktualisierungsfrequenz der durchsuchten Datenquellen angepasst. Wird beispielsweise anhand eines Vergleichs der bei einer aktuellen Durchsuchung gefundenen und überprüften Dokumente mit den bei dem letzten Durchsuchungsvorgang analysierten Dokumenten festgestellt, dass sich der Inhalt der Dokumente geändert hat, so wird die Durchsuchungsfrequenz für diese Datenquelle bzw. Website automatisch erhöht. Wird andererseits festgestellt, dass sich selbst nach einer vorgegebenen Anzahl von Durchsuchungen keine Veränderungen in den von der Quelle zur Verfügung gestellten Dokumenten ergeben haben, so wird die Durchsuchungsfrequenz für diese Quelle wieder herabgesetzt. Das System erkennt somit automatisch diejenigen Datenquellen, deren Daten sich häufig ändern. Die Durchsuchungsfrequenz kann dabei vorzugsweise auf einen minimalen zeitlichen Abstand zwischen zwei Durchsuchungsvorgängen von 15 Min. herabgesetzt werden.

Hierdurch ist gewährleistet, dass selbst stundenaktuelle Nachrichten und Informationen von dem Recherchesystem verarbeitet und erschlossen werden können.

Der erste Aspekt der vorliegenden Erfindung betrifft auch ein Computer-Programm zum Erstellen einer Datenbank, welches in der oben beschriebenen Weise zumindest einige Quellen des Datenraums wiederholt nach Dokumenten durchsucht und dabei die Durchsuchungsfrequenz an die Aktualisierungsfrequenz der Quellen anpasst. Darüber hinaus betrifft dieser Erfindungsaspekt auch ein Verfahren und ein System zum Suchen und Recherchieren von Dokumenten innerhalb eines Datenraums, wobei hierbei auf die in einer Datenbank enthaltenen Informationen zurückgegriffen wird, welche entsprechend den obigen Ausführungen aktualisiert wird.

Ein zweiter Aspekt der vorliegenden Erfindung betrifft die Art und Weise der Darstellung bzw. der zur Verfügungstellung der den gewünschten Suchbegriff enthaltenden Dokumente. Um dem Benutzer eine zusätzliche Hilfestellung bei der Auswahl eines Dokuments aus der Menge der zur Verfügung gestellten Dokumente geben zu können, wird gemäß diesem zweiten Aspekt der vorliegenden Erfindung zu jedem zur Verfügung gestellten Dokument ein sogenannter Qualitätswert erstellt, der ebenfalls ausgegeben und/oder bei der Darstellung der zur Verfügung gestellten Dokumente berücksichtigt wird.

Der Qualitätswert wird erfindungsgemäß unter Berücksichtigung der Herkunft bzw. Autorschaft des Dokuments, der Zuverlässigkeit der das Dokument zur Verfügung stellenden Datenquelle sowie vorzugsweise auch unter Berücksichtigung der Aktualität und des Inhalts des Dokuments erstellt. Es handelt sich hierbei um einen den Kontext des Dokuments berücksichtigenden Wert, der eine Aussage über die Qualität bzw. die Zuverlässigkeit und Glaubwürdigkeit der in dem Dokument enthaltenen Informationen gibt. Ein hoher Qualitätswert gibt dem Benutzer des Recherchesystems beispielsweise die Sicherheit, dass die in dem Dokument enthaltenen Informationen zutreffend und verläßlich sind.

Dieser zweite Aspekt der vorliegenden Erfindung betrifft wiederum auch ein System zum Suchen und Recherchieren von einen Suchbegriff betreffenden Dokumenten, welches eine Suchmaschine aufweist, die auf die Eingabe eines Suchbegriffs hin in dem Datenraum enthaltene Dokumente erfasst, welche den Suchbegriff betreffen bzw. beinhalten, sowie eine Ausgabevorrichtung, über welche zumindest ein Teil der von der Suchmaschine gefundenen Dokumente zur Verfügung gestellt wird. Das erfindungsgemäße System zeichnet sich durch sogenannte Ranking-Mittel aus, welche die Qualität und Aktualität jedes zur Verfügung gestellten Dokuments bewerten und den oben angesprochenen zugehörigen Qualitätswert erstellen, der von der Ausgabevorrichtung ausgegeben und/oder bei der Darstellung der zur Verfügung gestellten Dokumente berücksichtigt wird. Beispielsweise kann bei der Anzeige der gefundenen Dokumente neben dem Dokumentennamen bzw. der Dokumentenadresse der entsprechend zugehörige Qualitätswert angegeben werden. Eine andere - bevorzugte - Möglichkeit besteht darin, die Liste der zur Verfügung gestellten Dokumente entsprechend dem Qualitätswert zu sortieren. Die nach objektiven Maßstäben gesehen relevantesten und besten Dokumente werden somit in der Liste an vorderer Position geführt, so dass der Benutzer bei der Auswahl eines Dokuments aus dem vorderen Bereich davon ausgehen kann, dass das Dokument mit einer hohen Wahrscheinlichkeit seinen Erwartungen entspricht.

Auch der dritte Aspekt der vorliegenden Erfindung stellt dem Benutzer des Recherchesystems zusätzliche Informationen zur Verfügung, die ihm die Auswahl eines Dokuments aus der Menge der zur Verfügung gestellten Dokumente erleichtern. Dabei wird gemäß diesem dritten Aspekt der vorliegenden Erfindung zu jedem zur Verfügung gestellten Dokument eine Zusammenfassung erstellt, die ebenfalls angezeigt wird. Ohne dass der Benutzer darauf angewiesen ist, das Dokument konkret anzuwählen bzw. die entsprechende Internet-Seite zu kontaktieren, eröffnet sich ihm hierdurch somit die Möglichkeit, bereits vorab nähere Informationen hinsichtlich des Inhalts des Dokuments zu erhalten.

Wesentlich an diesem dritten Erfindungsaspekt ist, dass es sich um eine echte Zusammenfassung des Dokuments handelt. Im Gegensatz zu der Suchmaschine Google beispielsweise, bei der lediglich der aus dem Zusammenhang gerissene, den gewünschten Suchbegriff umgebene Bereich des Dokuments dargestellt wird, wird gemäß der vorliegenden Erfindung bei der Erstellung der Zusammenfassung der Kontext des Dokuments berücksichtigt. Zwar kann die Zusammenfassung wiederum lediglich auf Basis der den Suchbegriff umgebenden Daten innerhalb des Dokuments erstellt werden, allerdings erfolgt dies anhand einer linguistisch-stochastischen Analyse, so dass die Aussagekraft der Zusammenfassung und damit die Hilfestellung für die Benutzer deutlich erhöht wird. Gemäß einer vorteilhaften Weiterbildung dieses dritten Erfindungsaspekts kann die Zusammenfassung auch auf Basis des gesamten Dokuments erfolgen, wobei vorzugsweise der Komprimierungsfaktor beim Erstellen der Zusammenfassung wählbar ist.

Auch dieser dritte Aspekt der vorliegenden Erfindung betrifft ein System zum Recherchieren von Dokumenten innerhalb eines Datenraums, welches als kennzeichnendes Merkmal Zusammenfassungs-Mittel aufweist, welche zu jedem zur Verfügung gestellten Dokument eine Zusammenfassung erstellen, die von der Ausgabevorrichtung des Systems gemeinsam mit den gefundenen Dokumenten zur Verfügung gestellt wird.

Die drei angesprochenen Erfindungsaspekte tragen jeder für sich zur Verbesserung der Qualität der gefundenen und zur Verfügung gestellten Daten bei, sie können allerdings selbstverständlich auch miteinander kombiniert werden, da jede Weiterentwicklung auch von den Vorteilen der anderen Erfindungsaspekte profitiert.

Eine andere vorteilhafte Weiterbildung des erfindungsgemäßen Systems kann ferner darin bestehen, dass die Dokumente - wie in der WO 03/005235 A1 der Anmelderin beschrieben - verschiedenen Kategorien oder Themengebieten zugeordnet werden, so dass für den Benutzer die Möglichkeit besteht, zunächst eine Vorauswahl unter den den Suchbegriff enthaltenen Dokumenten zu treffen.

Insgesamt wird somit ein sehr leistungsfähiges Verfahren bzw. System zum Recherchieren von Daten im Internet erhalten. Anzufügen ist allerdings, dass die vorliegende Erfindung nicht nur auf die Recherche von Dokumenten im Internet beschränkt ist. Ebenso könnte das erfindungsgemäße Recherchesystem auch beim Recherchieren von Daten in lokalen Netzen, beispielsweise Firmen- oder Universitätsnetzen sowie in allgemeinen Datenbanken zum Einsatz kommen.

Nachfolgend soll die Erfindung anhand der beiliegenden Zeichnungen näher erläutert werden. Es zeigen:
- Fig. 1: schematisch den Aufbau eines erfindungsgemäßen Systems zum Recherchieren von Dokumenten in einem Datenraum;
- Fig. 2: ein Schema zur Erläuterung des Gedankens, die Dokumente verschiedenen Kategorien bzw. Themengebieten zuzuordnen;
- Fig. 3: ein Ausführungsbeispiel für einen Kategoriebaum zu dem Themengebiet Wirtschaft und Finanzen;
- Fig. 4: ein Beispiel für die Datenausgabe des erfindungsgemäßen Systems bei der Verwendung des in Fig. 3 dargestellten Kategoriebaums;
- Fig. 5: die Vorgehensweise beim Trainieren des Systems für den Aufbau des zum Kategorisieren von Dokumenten erforderlichen Wissens; und
- Fig. 6: die Funktionsweise des erfindungsgemäßen Recherchesystems beim Aufbau und Aktualisieren der Datenbank.

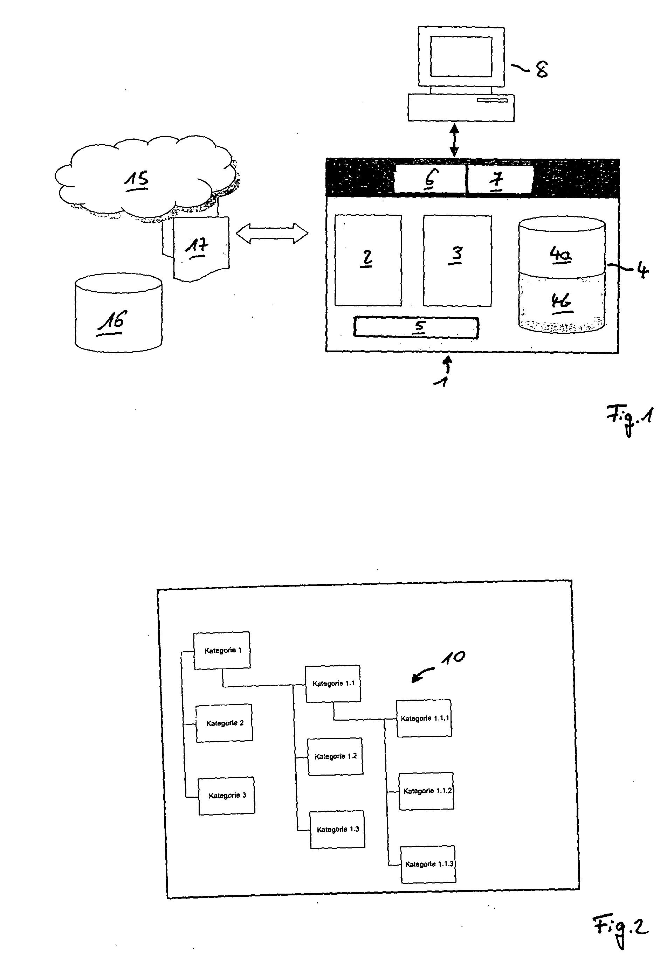

Fig. 1 zeigt in Allgemeinheit ein Recherchesystem 1 zum Suchen und Recherchieren von Dokumenten in einem Datenraum. Bei dem Datenraum kann es sich insbesondere um das Internet 15 handeln, ebenso könnte das System 1 allerdings dazu dienen, Daten lediglich in einem begrenzten Datenraum 16, beispielsweise dem Netzwerk einer Firma oder einer Universität zu recherchieren. Es besteht ferner die Möglichkeit, dass das System 1 sowohl Daten aus einem jedermann zugänglichen Datenraum, also beispielsweise dem Internet 15, als auch Daten aus dem nur einer begrenzten Anzahl von Personen zugänglichen internen Datennetz 16 erschließt. In diesem Fall könnten dann beispielsweise vorgesehen sein, dass das Recherchesystem 1 bei der Ausgabe von Suchinformationen zunächst die Berechtigung eines Benutzers - schematisch dargestellt durch den Computer 8 - überprüft und lediglich Informationen aus dem für den Benutzer 8 zulässigen Datenraum, z.B. nur Daten aus dem Internet 15, nicht jedoch aus dem Informationsnetz 16 zur Verfügung stellt.

Das erfindungsgemäße Recherchesystem 1 besteht zunächst aus vier sogenannten Kernmodulen, die in gleicher oder abgewandelter Funktion in jedem Recherchesystem vorhanden sind. Hierbei handelt es sich um ein Filtermodul 2, ein Analysemodul 3, eine Datenbank 4 sowie ein Aktualisierungsmodul 5.

Neben den vier Kernmodulen weist das erfindungsgemäße Recherchesystem 1 ferner noch zwei weitere ergänzende Module 6 und 7 auf. Hierbei handelt es sich um ein Ranking-Modul 6, welches die Qualität eines dem Benutzer 8 zur Verfügung gestellten Dokuments bewertet, sowie um ein Zusammenfassungs-Modul 7, welches zu jedem zur Verfügung gestellten Dokument eine kurze Zusammenfassung erstellt. Die Funktionsweise dieser beiden ergänzenden Module 6 und 7 wird zu einem späteren Zeitpunkt noch ausführlicher erläutert, zunächst soll das Zusammenwirken der vier Kernmodule beschrieben werden.

Wie bereits zuvor erläutert wurde, würde eine erst nach der Eingabe eines Suchbegriffes durch den Benutzer 8 gestartete Recherche oder Suche nach geeigneten Dokumenten im Internet 15 zu viel Zeit beanspruchen. Aus diesem Grund kann das an den Benutzer 8 ausgegebene Rechercheergebnis lediglich auf der Basis von Informationen erfolgen, die bereits in der Datenbank 4 enthalten sind. Durch das Vorerschließen des Datenraums 15 bzw. 16 wird die Datenbank 4 aktualisiert, so dass dem Benutzer 8 möglichst umfangreiche und aktuelle Daten zur Verfügung gestellt werden können.

Das Aktualisieren der Datenbank 4 erfolgt dadurch, dass das Recherchesystem 1 regelmäßig in dem Datenraum 15 befindliche Datenquellen, im Falle des Internets also verschiedene Websites kontaktiert und nach Dokumenten 17 durchsucht. Die Dokumente 17 werden dann von dem Recherchesystem 1 analysiert und in der Datenbank 4 werden Informationen hinsichtlich der Quellen des Dokuments 17 sowie des Inhalts davon gespeichert.

Die auf diese Weise durchgeführte Vorerschließung des Datenraums bzw. der Datenräume 15 und 16 erfolgt automatisiert und wird von dem Aktualisierungsmodul 5 gesteuert. In der Regel verwaltet dieses Aktualisierungsmodul 5 eine Vielzahl von automatisierten Programmen, sogenannten Crawlern oder Spinnen, die selbständig die Datenquellen des Datenraums 15, 16 kontaktieren und nach Dokumenten 17 durchsuchen. Die Verarbeitung der auf diese Weise erschlossenen Dokumente 17 erfolgt dann durch die beiden Module 2 und 3, deren Funktion nachfolgend erläutert werden soll.

Aufgabe des Filtermoduls 2 ist es zunächst, aus einem von dem Aktualisierungsmodul 5 bzw. den von dem Aktualisierungsmodul 5 verwalteten Crawlern erschlossenen Dokument 17 den relevanten Text zu extrahieren.

Üblicherweise sind die im Internet zur Verfügung gestellten Informationen mit einer Vielzahl von graphischen Darstellungen oder Bildern versehen. Handelt es sich beispielsweise um HTML-Dokumente, so sind diese ferner mit einer Vielzahl von Formatierungsanweisungen versehen, welche die Darstellung des Texts betreffen. Hierbei handelt es sich allerdings um nicht-relevante Zusatzinformationen, die mit dem eigentlichen Inhalt des Dokuments gar nichts zu tun haben und eine Analyse des Dokumenteninhalts eher beeinträchtigen würden. Aufgabe des Filtermoduls 2 ist es deshalb, diese nicht-relevanten Zusatzinformationen weitestgehend zu entfernen, so dass die nachfolgende Analyse des eigentlichen Inhalts des Dokuments 17 effektiver durchgeführt werden kann.

Genau genommen besteht das Filtermodul 2 aus einer Vielzahl von einzelnen Filtern, welche im Zusammenwirken den relevanten Text des Dokuments extrahieren. In einer ersten Stufe sind die Textfilter vorgesehen, welche aus den unterschiedlichen Dateiformaten den Text extrahieren. Hierbei kann es sich beispielsweise um Filter handeln, die aus PDF-Dokumenten, Dokumenten eines Textverarbeitungsprogramms (beispielsweise aus Word-Dokumenten) und HTML-Dokumenten den Text extrahieren. Diesen Textfiltern nachgeschaltet sind Sprachfilter, welche besondere Eigenheiten der Sprache, in der das Dokument vorliegt, berücksichtigen. Beispielsweise können hierdurch die in der deutschen Sprache verwendete Umlaute (ä, ö und ü) erkannt und so aufbereitet werden, dass eine nachfolgende Analyse des Inhalts des Dokuments möglichst schnell durchgeführt werden kann.

Die auf diese Weise bearbeiteten Dokumente werden von dem Filtermodul 2 dann an das Analysemodul 3 weitergeleitet. Dieses analysiert den Inhalt der Dokumente und ist demzufolge dafür verantwortlich, welche Informationen in der Datenbank 4 gespeichert werden.

In einer einfachen Variante werden hierbei die Dokumente nach den wichtigsten darin enthaltenen Stich- oder Schlüsselwörtern durchsucht, wobei in der Datenbank 4 dann zu jedem Dokument Informationen hinsichtlich der Quelle des Dokuments, beispielsweise die Internet-Adresse (URL), sowie der darin enthaltenen Stichwörter gespeichert werden. Wird nun von einem Benutzer 8 ein Suchbegriff übermittelt, so stellt das System 1 anhand der in der Datenbank 4 enthaltenen Informationen fest, welche Dokumente diesen Suchbegriff beinhalten und stellt dem Benutzer 8 dementsprechend Informationen hinsichtlich dieser Dokumente zur Verfügung. Dies entspricht der Grundfunktion einer üblichen Suchmaschine zum Recherchieren von Daten im Internet.

Ein besonderes Merkmal einer bevorzugten Ausführungsform des erfindungsgemäßen Recherchesystems 1 besteht darin, dass das System dem Benutzer 8 nicht nur eine Liste der den vorgegebenen Suchbegriff enthaltenden bzw. betreffenden Dokumente zur Verfügung stellt, sondern darüber hinaus auch darüber informiert, in welchen Themengebieten oder Kategorien die gefundenen Dokumente angesiedelt sind. Hierdurch wird dem Benutzer die Möglichkeit gegeben, eine gewisse Vorauswahl aus der Gesamtmenge der gefundenen Dokumenten zu treffen.

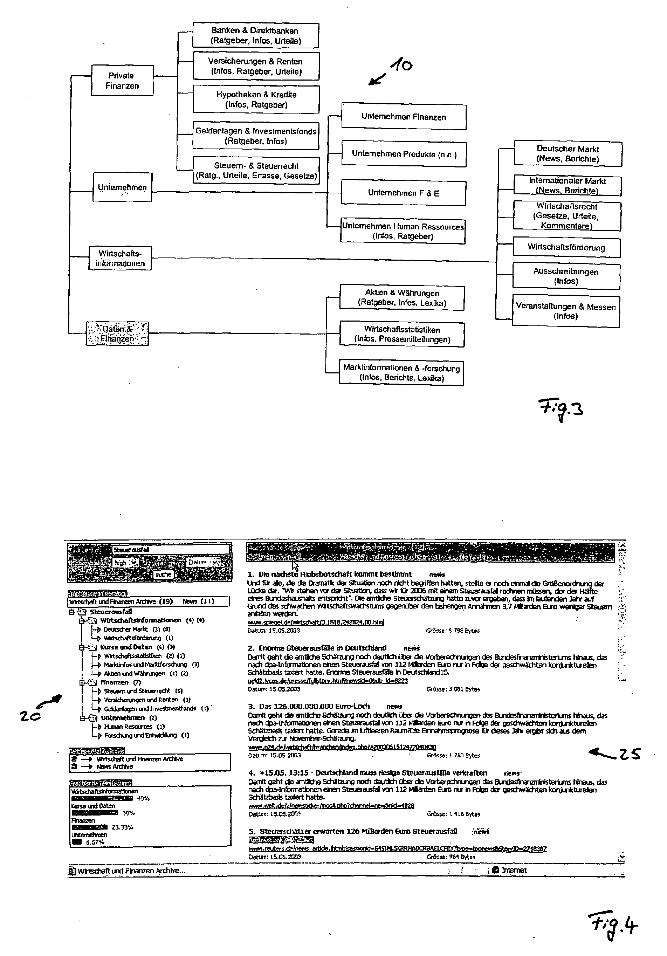

Fig. 2 zeigt schematisch eine Struktur 10 verschiedener Kategorien oder Themengebiete, in welche die im Rahmen der Vorerschließung analysierten Dokumente eingeordnet werden sollen. Dabei können mehrere unterschiedliche Hauptkategorien (beispielsweise Medizin, Wirtschaft und Finanzen, Wissenschaft, Sport usw.) vorgesehen sein, die sich in mehreren Stufen in weitere Unterkategorien verzweigen. Ein Ausführungsbeispiel für einen sog. Kategorienbaum zu der Hauptkategorie "Wirtschaft und Finanzen" ist in Fig. 3 dargestellt.

Ein im Rahmen der Vorerschließung analysiertes Dokument wird dabei jeweils zumindest einer der vorgegebenen Kategorien zugeordnet. Nach der Eingabe eines Suchbegriffs wird dem Benutzer 8 dann nicht nur eine Liste der gefundenen Dokumente zur Verfügung gestellt, sondern er wird darüber hinaus auch darüber informiert, zu welchen Themengebieten oder Kategorien Dokumente gefunden wurden. Ein Beispiel für eine entsprechende Ausgabe ist in Fig. 4 dargestellt. Dabei ist auf der rechten Seite des Displays eine Übersicht 20 dargestellt, welche darüber informiert, in welchen Themengebieten Dokumente, die den Suchbegriff betreffen, gefunden wurden. Die Darstellung der relevanten Themengebiete folgt dabei dem in Fig. 3 dargestellten Kategorienbaum, wobei lediglich diejenigen Kategorien bzw. Unterkategorien angeführt sind, zu denen zumindest ein Dokument erfasst wurde. Wählt der Benutzer nun eine der möglichen Kategorien aus, so werden die entsprechend zugeordneten Dokumente in einer Liste 25 auf der rechten Seite des Displays dargestellt. Dem Benutzer wird hierdurch die Möglichkeit einer Vorauswahl gegeben, so dass er die in der Liste 25 dargestellten Dokumente auf für ihn interessante Themengebiete beschränken kann.

Durch die Zuordnung der Dokumente zu verschiedenen Themengebieten bzw. Kategorien wird somit die Benutzerfreundlichkeit des Recherchesystems deutlich erhöht. Auf der anderen Seite bringt diese Vorgehensweise allerdings auch einen höheren Aufwand mit sich, da das Analysemodul 3 nicht nur die in dem Dokument enthaltenen Stichworte oder Suchbegriffe finden, sondern darüber hinaus auch entscheiden muß, zu welcher Kategorie das Dokument gehört.

Bisher bekannte Verfahren der Dokumentenerschließung und -kategorisierung weisen in der Regel zwei unterschiedliche Ansätze auf. Bei dem sogenannten linguistischen Ansatz wird versucht, den Inhalt eines Dokuments über die Erkennung von Satzstrukturen zu extrahieren. Dabei werden die einzelnen Satzteile separiert, um anschließend die zentrale Aussage des Satzes zu suchen. Wurden die zentralen Aussagen aller Sätze eines Dokuments gefunden, so kann mit großer Wahrscheinlichkeit die inhaltliche Richtung des Dokuments bestimmt und das Dokument einem Themengebiet zugeordnet werden.

Bevor ein solches linguistisches Verfahren mit Erfolg eingesetzt werden kann, muß entschieden werden, welche Satzaussagen zu bestimmten Themen gehören. Da dies überwiegend in das Aufgabengebiet von Linguisten fällt, wird von einem linguistisch basierten Verfahren gesprochen. Derartige Verfahren tendieren dazu, sehr komplexe Algorithmen zu verwenden. Sie erfordern große technische Ressourcen, wobei derzeit dennoch die inhaltliche Erschließung eines Dokuments und damit die Zuordnung zu einem Themengebiet nur mit einem durchschnittlichen Erfolg gelingt.

Die zweite Möglichkeit zur Erkennung des Inhalts eines Dokuments basiert auf sogenannten mathematisch-stochastischen Verfahren. Diese Verfahren beruhen allein auf der Statistik und dem Vorhandensein bestimmter Buchstaben bzw. Buchstabengruppen innerhalb eines Dokuments. Es wird unterstellt, dass Dokumente, die sich mit einem bestimmten Themengebiet befassen, durch das Auftreten von charakteristischen Buchstabengruppen unterschieden werden können. Wurde im Vorfeld genau analysiert, welche Buchstabengruppen bei welchem Thema häufig auftreten, kann hieraus abgeleitet werden, welches Thema jeweils in einem Dokument behandelt wird.

Dieser Ansatz setzt allerdings voraus, dass bereits im Vorfeld erkannt wird, welche Buchstabenkombinationen in welcher Häufigkeit auf ein bestimmtes Themengebiet verweisen. Insofern wird für diesen Ansatz eine große Menge von Dokumenten benötigt, die bereits einem Thema zugeordnet wurden. Die Eigenschaften dieser Dokumente werden untersucht und als sogenannter Extrakt für jede Kategorie abgespeichert.

Da es somit bekannt ist, dass bestimmte Buchstabenkombinationen mit hoher Wahrscheinlichkeit ein bestimmtes Themengebiet repräsentieren, können neue Dokumente dem System zugeführt und mit den Erkenntnissen aus dem ersten Arbeitsschritt verglichen werden. Ist ein Dokument einem der vorhandenen Extrakte gleich oder ähnlich, ist die Wahrscheinlichkeit hoch, dass das neue Dokument zu der durch den Extrakt repräsentierten Kategorie gehört (sogenanntes Bayes'sches Theorem).

Das für das erfindungsgemäße Recherchesystem verwendete Verfahren zum Erschließen des Inhalts von Dokumenten beruht auf einer Kombination der beiden oben beschriebenen Ansätze, wobei die jeweils effektivsten Elemente der beiden Ansätze genutzt werden. Das Verfahren ist dabei derart optimiert, dass spezielle natürlich-sprachige Dokumente schnell und präzise thematisch klassifiziert werden können. Es ist ausführlich in der WO 03/005235 A1 der Anmelderin beschrieben, auf die zur näheren Erläuterung verwiesen wird.

Zusammengefasst beruht das Verfahren auf der Erkenntnis, dass das Auftreten bestimmter Wörterpaare signifikant für die betroffenen Themengebiete ist. Ist bekannt, welche Themengebiete durch welche signifikanten Wörterpaare repräsentiert werden, so reduziert sich die Aufgabe der Erschließung des Inhalts eines Dokuments darauf, die in dem Dokument vorhandenen signifikanten Wörterpaare festzustellen. Dies ist deutlich weniger aufwendig als eine komplexe stochastische Analyse des gesamten Dokumenteninhalts, weshalb auf sehr einfache aber schnelle Weise ein Dokument einem bestimmten Themengebiet zugeordnet werden kann.

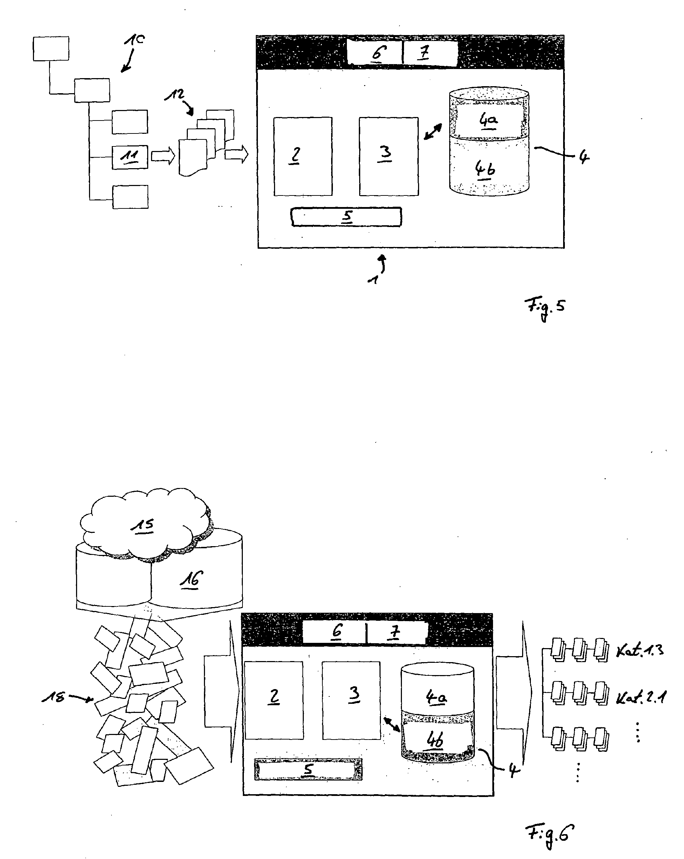

Auch bei diesem Verfahren ist allerdings zunächst erforderlich, dass das System "lernt", welche signifikanten Wörterpaare auf welche Themengebiete hinweisen. Das System muß demzufolge zunächst trainiert werden, was nachfolgend anhand von Fig. 5 erläutert werden soll.

In einem ersten Schritt wird die Taxonomie festgelegt, d.h. die verschiedenen Themengebiete sowie die zugehörigen Unterkategorien müssen bestimmt werden. Es wird somit zunächst ein sehr umfangreicher Kategorienbaum erstellt, wie er zumindest teilweise in Fig. 3 dargestellt ist.

In dem zweiten Schritt muß dann für jede Kategorie festgelegt werden, welche Wörterpaare für diese Kategorie signifikant sind. Dies erfolgt durch eine inhaltliche Analyse von zuvor manuell zugeordneten Musterdokumenten. Gemäß der Darstellung in Fig. 5 werden beispielsweise in diesem Trainingsschritt der Kategorie 11 des Kategorienbaums 10 mehrere Dokumente 12 manuell zugeordnet, die dem Recherchesystem 1 zugeführt werden. Nach der Bearbeitung der Dokumente durch das Filtermodul 2 erfolgt die Analyse durch das Analyse-Modul 3, welches die Dokumente auf signifikante Wörterpaare hin durchsucht. Hierbei werden zu jeder Kategorie die am häufigsten auftretenden Kombinationen aufeinanderfolgender, recherchierbarer Wörter bestimmt. Die hierbei gewonnenen Erkenntnisse werden dann in einem ersten Bereich 4a der Datenbank 4 hinterlegt, auf die bei der späteren Analyse und Erschließeung neuer, d.h. unbekannter Dokumente, die noch keiner Kategorie zugeordnet wurden, zurückgegriffen wird. Die in dem ersten Abschnitt 4a der Datenbank 4 enthaltenen Informationen - die sog. "Extrakte" - sind somit dafür verantwortlich, wie gut und genau Dokumente den verschiedenen Themengebieten des Kategorienbaums zugeordnet werden.

Ist dieser Trainingsprozess abgeschlossen, kann mit der eigentlichen Vorerschließung des Datenraums begonnen werden. Dabei werden die von dem Recherchesystem 1 untersuchten Datenräume 15, 16 systematisch nach Dokumenten 18 durchsucht, die klassifiziert werden sollen. Nach der Bearbeitung des Dokuments durch das Filtermodul 2 durchsucht dann das Analysemodul 3 das zu klassifizierende Dokument nach signifikanten Wörterpaaren und vergleicht die gewonnenen Ergebnisse mit den in dem ersten Abschnitt 4a der Datenbank 4 enthaltenen Informationen. Anhand dieses Vergleichs kann dann das Dokument 18 einem bestimmten Themengebiet zugeordnet werden.

Die hierbei gewonnenen Daten hinsichtlich der Quelle des Dokuments, also beispielsweise der zugehörigen Internet-Adresse, des zugehörigen Themengebiets sowie der darin enthaltenen Stichwörter werden dann in dem zweiten Bereich 4b der Datenbank 4 gespeichert. Die in diesem zweiten Abschnitt 4b enthaltenen Informationen stellen letztendlich das den Anwender interessierende Wissen des Recherchesystems 1 dar. Wird von dem Anwender ein Suchbegriff eingegeben, so greift das System 1 ausschließlich auf die in dem zweiten Abschnitt 4b enthaltenen Informationen zurück, um die gewünschten Ergebnisse zu liefern.

Das Erschließen, Analysieren und Katalogisieren der in dem Datenraum zur Verfügung stehenden Dokumente läuft während des späteren Betriebs des Recherchesystems 1 permanent ab, um die Datenbank 4 auf einem möglichst aktuellen Stand zu halten. Verantwortlich hierfür ist in erster Linie das Aktualisierungsmodul 5, welches das Durchsuchen der Datenquellen nach neuen Dokumenten steuert.

Ein dem ersten Erfindungsgedanken entsprechender wesentlicher Aspekt der vorliegenden Erfindung besteht dabei darin, dass nicht alle Datenquellen innerhalb des Datenraums gleich behandelt werden. So gibt es deutliche Unterschiede hinsichtlich der Aktualität der von den verschiedenen Quellen zur Verfügung gestellten Informationen. Während die von einigen Quellen zur Verfügung gestellten Dokumente lediglich in einem Zeitraum von einigen Wochen oder Monaten aktualisiert werden, können sich die Informationen anderer Datenquellen, beispielsweise die Websites von Nachrichtenkanälen oder Magazinen sehr schnell ändern.

Gemäß dem ersten Aspekt der vorliegenden Erfindung wird dieser Unterschied in der Dynamik der Datenquellen berücksichtigt, um die Datenbank 4 auf einem möglichst aktuellen Stand zu halten. So werden einige Quellen zum Aktualisieren der Datenbank in wiederholten Abständen nach neuen Dokumenten durchsucht, wobei die Durchsuchungsfrequenz von der Aktualisierungsfrequenz der entsprechenden Quelle abhängt. Der bzw. die von dem Aktualisierungs-Modul 5 verwalteten Crawler sind dabei in der Lage, sich häufig ändernde bzw. häufig aktualisierende Webseiten zu identifizieren und die Besuchsfrequenz für diese Webseite an die erkannte Aktualisierungsfrequenz automatisch anzupassen.

Eine entsprechende Anpassung der Besuchsfrequenz kann beispielsweise dadurch erfolgen, dass bei einem erneuten Besuch der Website zunächst festgestellt wird, ob sich der Inhalt der angebotenen Dokumente geändert hat. Ist dies der Fall, so wird die Zeit bis zu dem nächsten Besuch dieser Webseite herabgesetzt, da die von dieser Quelle zur Verfügung gestellten Daten offensichtlich häufiger geändert werden. Die Durchsuchungsfrequenz kann dabei bis zu einem Zeitabstand von 15 Min. zwischen zwei Durchsuchungsvorgängen herabgesetzt werden, so dass selbst stundenaktuelle Neuigkeiten verarbeitet und erschlossen werden können. Wird hingegen festgestellt, dass sich auch nach einem mehrmaligen (z.B. nach dem dritten) Besuchen der Website der Inhalt der zur Verfügung gestellten Dokumente nicht verändert hat, so wird der Zeitraum bis zu dem nächsten Durchsuchungsvorgang erhöht.

Durch die adaptive Anpassung der Durchsuchungsfrequenz an die Aktualisierungsfrequenz der Datenquellen ist sichergestellt, dass selbst die neuesten Informationen noch von dem Recherchesystem 1 erfaßt und berücksichtigt werden können. Beispielsweise besteht die Möglichkeit, den Anwender speziell in aktuellen Daten recherchieren zu lassen, wodurch der Komfort bei der Benutzung nochmals deutlich erhöht wird.

Der zweite und dritte Aspekt der vorliegenden Erfindung betrifft die Art und Weise der Darstellung der zu einem Suchbegriff gefundenen Dokumente. Die Möglichkeit der Auswahl eines bestimmten Themengebiets erleichtert es dem Benutzer zwar, seine Suche auf Dokumente zu beschränken, die eine von ihm gewünschte Kategorie betreffen, letztendlich wird dem Benutzer allerdings als Endergebnis der Recherche eine Liste von Dokumenten bzw. Dokumentennamen oder -adressen zur Verfügung gestellt. Um zu diesem Zeitpunkt den Benutzer bei der Auswahl eines Dokuments aus der Liste zusätzlich zu unterstützen, sollen weitere Informationen hinsichtlich der Qualität des Dokuments sowie dessen Inhalts zur Verfügung gestellt werden. Hierfür sind die bereits oben angesprochenen ergänzenden Module 6 und 7 verantwortlich.

Das Ranking-Modul 6 basiert auf einem speziellen, neu entwickelten Quellen- und Dokumenten-Ranking. Im Gegensatz zu klassischen Suchmaschinen-Algorithmen, die in erster Linie die Verlinkungsstruktur bzw. die Anzahl der Verweise auf die entsprechende Webseite bewerten, berücksichtigt das der vorliegenden Erfindung zugrundeliegende System den Kontext einer Seite und eines Dokuments sowie dessen Herkunft. In das Ranking werden dabei automatisch berechnete Gewichtungen hinsichtlich der Herkunft bzw. der Autorschaft eines Dokuments, der Zuverlässigkeit und Relevanz der Quelle sowie der Aktualität - d.h., des Zeitpunkts der erstmaligen Verfügbarkeit - der Informationen berücksichtigt.

Genau genommen werden bei dem Erstellen des Qualitätswerts vier sog. Ranking-Faktoren berücksichtigt, die nachfolgend erläutert werden sollen.

Ein erster Faktor (Aktualität) berücksichtigt die Aktualität der Dokumente. Hierbei werden die Dokumente hinsichtlich des Zeitpunkts gerankt, an dem die Suchmaschine sie gecrawlt und erschlossen hat. Alle Dokumente besitzen somit einen Zeitstempel, der den Zeitpunkt ihrer erstmaligen Verfügbarkeit im Recherche-System markiert. Da - wie bereits erläutert - die Frequenz, mit der die Websites von den Crawlern besucht werden, auf einen Zeitabstand von lediglich 15min herabgesetzt werden kann, liegt zwischen der tatsächlichen Neuigkeit bzw. Aktualität eines Dokuments, d.h., dem Zeitpunkt seines Einstellens in das Internet, und seiner Verfügbarkeit in dem Recherche-System ein minimaler Zeitabstand. Der Zeitstempel des Aktualisierungs-Moduls 5 kann daher als gutes Maß für die Neuigkeit eines Dokuments verwendet werden.

Ein zweiter Ranking-Faktor (dynamischer Ranking-Faktor) betrifft die Anordnung des Suchbegriffs in den Dokumentendaten. Hierbei wird berücksichtigt, wo im gesamten digitalen Dokument der Suchbegriff vorkommt. Die Reihenfolge der Kriterien hierbei lautet in absteigender Reihenfolge:
- Domain-Name,
- Verzeichnis- und Dateinname,
- Meta Description,
- Meta Keywords und
- Inhalt.

Entsprechen dem dritten Faktor (statistischer Ranking-Faktor) werden die Dokumente hinsichtlich der Quelle, aus der sie stammen, statistisch gerankt. D.h., für bestimmte Quellen werden Konfidenz- bzw. Qualitätswerte festgelegt, die den Grad der Zuverlässigkeit und Relevanz festlegen, die Dokumente aus dieser Quelle in der Regel besitzen. Diese Konfidenzwerte werden gesondert ermittelt, wobei dies in drei Schritten erfolgt:
- In einem ersten Schritt werden mit Hilfe eines speziellen Filters sog. "Spam-Seiten", die viele Verweise auf sich selbst produzieren, erkannt und ausgeschlossen.
- In einem zweiten Schritt wird die Verlinkungsstruktur der Seite berücksichtigt, wobei solchen Webseiten, auf die viele andere Webseiten verweisen, ein höherer Stellenwert zugeordnet wird als solchen Seiten, die nur wenige Verweise erhalten.
- In einem dritten Schritt schließlich wird die Art der Quelle berücksichtigt, wobei Webseiten von z.B. Medien, Nachrichtenagenturen, Universitäten und Behörden wiederum einen höheren Stellenwert erhalten als Werbeseiten oder PR-Seiten von Unternehmen oder Seiten von Privatanbietern.

Gemäß dem vierten Faktor (Content-Ranking-Faktor) schließlich werden die Dokumente hinsichtlich ihres Inhalts statistisch gerankt. Hierbei werden die Dokumente mittels linguistisch-statistischer Verfahren inhaltlich erschlossen und klassifiziert. Sie erhalten einen gesonderten Klassifikationswert, der darüber Auskunft gibt, in welchem Maße das Dokument den inhaltlichen Vorgaben der Klasse bzw. Kategorie, der es zugeordnet wurde, entspricht. Je höher dieser Wert ist, desto signifikanter ist das Dokument.

Wesentlich ist, dass das Ranking-Modul 6 alle vier Faktoren berücksichtigt bzw. kombiniert um zu einem Gesamtergebnis zu gelangen. Dabei besteht allerdings für einen Anwender die Möglichkeit, die Parameter bzw. Gewichtungsfaktoren für die Kombination der vier Ranking-Werte zu wählen bzw. zu verändern. Hierdurch kann die Arbeitsweise des Systems gezielt an Kundenwünsche angepaßt werden, wodurch sichergestellt ist, dass einem Benutzer genau diejenigen Dokumente zunächst angeboten bzw. zur Verfügung gestellt werden, die seinen Informationsbedürfnissen am ehesten entsprechen.

Auf diese Weise wird somit zu jedem Dokument ein Qualitätswert erstellt, der bei der Ausgabe der gefundenen Dokumente berücksichtigt wird. Eine Möglichkeit der Berücksichtigung des ermittelten Qualitätswerts besteht dabei darin, diesen unmittelbar neben dem Dokument bzw. dem Dokumentennamen anzuzeigen. Gemäß einer besonders bevorzugten Ausführung wird alternativ oder ergänzend dazu die Liste der angezeigten Dokumente entsprechend den zugeordneten Qualitätswerten sortiert. Dies bedeutet, dass das Dokument mit dem höchsten ermittelten Qualitätswert an erster Stelle angezeigt wird. Auf diese Weise ist sichergestellt, dass der Benutzer des Recherchesystems nicht versehentlich ein Dokument wählt, welches möglicherweise auf falschen Informationen basiert.

Schließlich würde auch noch die Möglichkeit bestehen, die Einzelfaktoren, aus denen sich der Gesamt-Qualitätswert zusammensetzt, getrennt neben dem jeweiligen Dokumentennamen anzuzeigen. Der Benutzer würde hierdurch zusätzliche Information erhalten, die ihn bei der Auswahl eines für ihn geeigneten Dokuments unterstützen können.

Eine weitere Unterstützung des Benutzers 8 des erfindungsgemäßen Recherchesystems 1 erfolgt durch das Zusammenfassungs-Modul 7, welches automatisch zu jedem dargestellten Dokument eine Zusammenfassung erstellt. Hierfür stehen drei verschiedene Varianten zur Verfügung.

Bei der sog. "suchwortorientierten Phrasenmarkierung" wird der Text rund um das Suchwort herum wird aus dem Dokument ausgeschnitten, um dem Benutzer einen ersten Eindruck vom Umfeld, in dem das Suchwort steht, zu verschaffen. Die Länge des Ausschnitts kann frei gewählt werden unter Respektierung von Wort- und Satzgrenzen. Werden zwei oder drei Suchworte eingegeben, werden entsprechend mehrere Ausschnitte gebildet. Für den Gesamtumfang der Ausschnitte wird dann eine Obergrenze festgelegt. Die Information wird hierbei aus dem Dokument und nicht wie bei Suchmaschinen üblich aus dem Metatext gezogen.

Eine Erweiterung hiervon stellt die themenorientierte Informationsextraktion dar. Zum Auffinden von thematischen Schwerpunkten bzw. zur Extraktion von themenspezifischen Informationen aus einem Dokument - unter Vernachlässigung anderer Inhalte des Dokuments - wird das Dokument mittels statistischer Methoden analysiert mit Blick auf die Verwendung und Gewichtung bestimmter Schlüsselbegriffe, die identisch sein können mit Suchbegriffen. Werden entsprechende thematische Schwerpunkte identifiziert, werden die betreffenden Textpassagen ausgeschnitten und zusammengestellt und dem Benutzer in Form einer Zusammenfassung zur Verfügung gestellt.

Schließlich kann auch eine inhaltsorientierte Textzusammenfassung erstellt werden, wobei unabhängig von konkreten Suchbegriffen für jedes Dokument eine Gesamtübersicht erstellt wird. Diese erleichtert die Entscheidung des Nutzers, ob das Dokument für ihn interessant ist oder nicht. Dazu werden mittels inhaltlicher, linguistisch-stochastischer Analysen und formaler Analysen des Dokumentenaufbaus die zentralen Aussagen bzw. Sätze eines Dokuments herauspräpariert und hierarchisiert. Dies geschieht in Hinsicht auf ihre wechselseitigen Abhängigkeiten. Die Länge der Zusammenfassung bzw. ihr Verdichtungsgrad oder der Komprimierungsfaktor kann dabei frei gewählt werden, je nach dem, wie viele Hierarchieebenen berücksichtigt werden sollen.

Insgesamt wird somit durch die vorliegende Erfindung die Qualität eines Recherchesystems zum Suchen und Recherchieren von einen Suchbegriff betreffenden Dokumenten innerhalb eines Datenraums deutlich erhöht. Zum einen werden dem Benutzer durch den Qualitätswert und die Zusammenfassung zusätzliche Hilfsmittel an die Hand gegeben, um ihn bei der Auswahl eines Dokuments aus der Liste der den Suchbegriff betreffenden oder beinhaltenden Dokumente zu unterstützen. Auf der anderen Seite ist gewährleistet, dass die Datenbank jederzeit auf dem aktuellsten Stand ist, so dass auch noch jüngste Informationen von dem Recherchesystem berücksichtigt werden können.

## Patentansprüche

1. Verfahren zum Erstellen einer Datenbank (4), die zur Verwendung mit einer Suchmaschine zum Suchen und Recherchieren von mindestens einen vorgegebenen Suchbegriff betreffenden Dokumenten (17, 18) innerhalb eines Datenraums (15, 16) vorgesehen ist,
wobei der Datenraum (15, 16) nach Dokumenten (17, 18) durchsucht wird und Informationen hinsichtlich der Quellen der Dokumente (17, 18) sowie deren Inhalte in der Datenbank (4) gespeichert werden,
**dadurch gekennzeichnet,**
**dass** zur Aktualisierung der Datenbank (4) zumindest einige Quellen des Datenraums (15, 16) wiederholt nach Dokumenten (17, 18) durchsucht werden, wobei die Durchsuchungsfrequenz von der Aktualisierungsfrequenz der Quellen abhängt.

2. Verfahren nach Anspruch 1,
**dadurch gekennzeichnet,**
**dass** zur Anpassung der Durchsuchungsfrequenz einer Quelle überprüft wird, ob die von der Quelle zur Verfügung gestellten Dokumente (17, 18) im Vergleich zu dem letzten Durchsuchungsvorgang geändert wurden,
wobei die Durchsuchungsfrequenz erhöht wird, wenn eine Veränderung festgestellt wurde.

3. Verfahren nach Anspruch 2,
**dadurch gekennzeichnet,**
**dass** die Durchsuchungsfrequenz für eine Quelle herabgesetzt wird, wenn sich nach einer vorgegebenen Anzahl von Durchsuchungen keine Veränderungen in den zur Verfügung gestellten Dokumenten (17, 18) ergeben haben.

4. Verfahren nach einem der Ansprüche 1 bis 3,
**dadurch gekennzeichnet,**
**dass** der minimale Zeitraum, nachdem eine Quelle ein weiteres mal durchsucht wird, 15 min beträgt.

5. Computer-Programm zum Erstellen einer Datenbank (4), die zur Verwendung mit einer Suchmaschine zum Suchen und Recherchieren von mindestens einen vorgegebenen Suchbegriff betreffenden Dokumenten (17, 18) innerhalb eines Datenraums (15, 16) vorgesehen ist,
wobei das Programm Quellen des Datenraums (15, 16) nach Dokumenten (17, 18) durchsucht und Informationen hinsichtlich der Quellen gefundener Dokumente (17, 18) sowie deren Inhalte in der Datenbank (4) speichert,
**dadurch gekennzeichnet,**
**dass** das Programm zur Aktualisierung der Datenbank (4) zumindest einige Quellen des Datenraums (15, 16) wiederholt nach Dokumenten (17, 18) durchsucht, wobei die Durchsuchungsfrequenz von der Aktualisierungsfrequenz der Quellen abhängt.

6. Computer-Programm nach Anspruch 5,
**dadurch gekennzeichnet,**
**dass** dieses zur Anpassung der Durchsuchungsfrequenz einer Quelle überprüft, ob die von der Quelle zur Verfügung gestellten Dokumente (17, 18) im Vergleich zu dem letzten Durchsuchungsvorgang geändert wurden,
wobei die Durchsuchungsfrequenz erhöht wird, wenn eine Veränderung festgestellt wurde.

7. Computer-Programm nach Anspruch 6,
**dadurch gekennzeichnet,**
**dass** dieses die Durchsuchungsfrequenz für eine Quelle herabsetzt, wenn sich nach einer vorgegebenen Anzahl von Durchsuchungen keine Veränderungen in den zur Verfügung gestellten Dokumenten (17, 18) ergeben haben.

8. Computer-Programm nach einem der Ansprüche 5 bis 7,
**dadurch gekennzeichnet,**
**dass** der minimale Zeitraum, nachdem eine Quelle ein weiteres mal durchsucht wird, 15 min beträgt.

9. Verfahren zum Suchen und Recherchieren von mindestens einen vorgegebenen Suchbegriff betreffenden Dokumenten (17, 18) innerhalb eines Datenraums (15, 16),
wobei der Datenraum (15, 16) zunächst nach Dokumenten (17, 18) durchsucht wird und Informationen hinsichtlich der Quellen der Dokumente (17, 18) sowie deren Inhalte in einer Datenbank (4) gespeichert werden,
und wobei nach der Eingabe eines Suchbegriffs anhand der in der Datenbank (4) enthaltenen Informationen diejenigen Dokumente (17, 18), welche den Suchbegriff beinhalten bzw. betreffen, erfaßt und zumindest ein Teil der erfaßten Dokumente (17, 18) einem Benutzer zur Verfügung gestellt werden,
**dadurch gekennzeichnet,**
**dass** zur Aktualisierung der Datenbank zumindest einige Quellen des Datenraums (15, 16) wiederholt nach Dokumenten (17, 18) durchsucht werden, wobei die Durchsuchungsfrequenz von der Aktualisierungsfrequenz der Quellen abhängt.

10. Verfahren nach einem der Ansprüche 1 bis 4 oder Anspruch 9,
**dadurch gekennzeichnet,**
**dass** die in der Datenbank (4) gespeicherten Informationen hinsichtlich des Inhalts eines Dokuments (17, 18) sowohl in dem Dokument (17, 18) enthaltene Stichwörter als auch ein dem Dokument (17, 18) zugeordnetes Themengebiet umfassen.

11. System zum Suchen und Recherchieren von mindestens einen vorgegebenen Suchbegriff betreffenden Dokumenten (17, 18) innerhalb eines Datenraums (15, 16), aufweisend
- eine Suchmaschine mit Aktualisierungsmitteln (5) zum Durchsuchen von Quellen des Datenraums (15, 16) nach Dokumenten (17, 18) sowie einer Datenbank (4) zum Speichern von Informationen hinsichtlich der in den durchsuchten Quellen gefundenen Dokumente (17, 18) sowie deren Inhalte,
- Mittel, welche anhand der in der Datenbank (4) enthaltenen Information diejenigen Dokumente (17, 18) des Datenraums (15, 16) erfassen, welche den Suchbegriff beinhalten bzw. betreffen, sowie
- eine Ausgabevorrichtung (8), über welche zumindest ein Teil der erfaßten Dokumente (17, 18) zur Verfügung gestellt wird,
**dadurch gekennzeichnet,**
**dass** die Aktualisierungsmittel (5) zur Aktualisierung der Datenbank (4) zumindest einige Quellen des Datenraums (15, 16) wiederholt nach Dokumenten (17, 18) durchsuchen, wobei die Durchsuchungsfrequenz von der Aktualisierungsfrequenz der Quellen abhängt.

12. System nach Anspruch 11,
**gekennzeichnet durch**
Analyse-Mittel (3), welche die von den Aktualisierungsmitteln (5) erschlossenen Dokumente (17, 18) analysieren und jeweils zumindest einem Themengebiet zuordnen, wobei die in der Datenbank (4) gespeicherten Informationen hinsichtlich des Inhalts eines Dokuments (17, 18) sowohl in dem Dokument (17, 18) enthaltene Stichwörter als auch das dem Dokument (17, 18) zugeordnete Themengebiet umfassen.

13. Verfahren zum Suchen und Recherchieren von mindestens einen vorgegebenen Suchbegriff betreffenden Dokumenten (17, 18) innerhalb eines Datenraums (15, 16),
wobei nach der Eingabe eines Suchbegriffs in dem Datenraum (15, 16) enthaltene Dokumente (17, 18), welche den Suchbegriff beinhalten bzw. betreffen, erfaßt und zumindest ein Teil der erfaßten Dokumente (17, 18) einem Benutzer zur Verfügung gestellt werden,
und wobei zu jedem zur Verfügung gestellten Dokument (17, 18) ein Qualitätswert erstellt wird, der ebenfalls ausgegeben und/oder bei der Darstellung der zur Verfügung gestellten Dokumente (17, 18) berücksichtigt wird,
**dadurch gekennzeichnet,**
**dass** bei der Erstellung des Qualitätswerts die Relevanz bzw. Zuverlässigkeit der das Dokument (17, 18) zur Verfügung stellenden Quelle berücksichtigt wird.

14. Verfahren nach Anspruch 13,
**dadurch gekennzeichnet,**
**dass** bei der Erstellung des Qualitätswerts der Autor des Dokuments (17, 18) berücksichtigt wird.

15. Verfahren nach Anspruch 13 oder 14,
**dadurch gekennzeichnet,**
**dass** bei der Erstellung des Qualitätswerts die Aktualität bzw. der Zeitpunkt der erstmaligen Verfügbarkeit des Dokuments (17, 18) berücksichtigt wird.

16. Verfahren nach einem der Ansprüche 13 bis 15,
**dadurch gekennzeichnet,**
**dass** bei der Erstellung des Qualitätswerts die Position des Suchbegriffs innerhalb des gesamten Dokuments (17, 18) berücksichtigt wird.

17. Verfahren nach einem der Ansprüche 13 bis 16,
**dadurch gekennzeichnet,**
**dass** bei der Erstellung des Qualitätswerts berücksichtigt wird, in welchem Maße das Dokument (17, 18) den inhaltlichen Vorgaben eines Themengebiets, dem das Dokument (17, 18) zugeordnet wurde, entspricht.

18. Verfahren nach einem der Ansprüche 13 bis 17,
**dadurch gekennzeichnet,**
**dass** der Qualitätswert durch eine Kombination von zumindest zwei Einzelfaktoren gebildet wird, wobei die Gewichtungsparameter für diese Faktoren wählbar sind.

19. Verfahren nach einem der Ansprüche 13 bis 18,
**dadurch gekennzeichnet,**
**dass** bei der Zurverfügungstellung der Dokumente (17, 18) diese in einer Liste dargestellt werden, wobei neben dem Dokumentenname bzw. der Dokumentenadresse auch der zugehörige Qualitätswert angezeigt wird.

20. Verfahren nach einem der Ansprüche 13 bis 19,
**dadurch gekennzeichnet,**
**dass** bei der Zurverfügungstellung der Dokumente (17, 18) diese in einer Liste dargestellt werden, wobei die Dokumente (17, 18) entsprechend dem Qualitätswert geordnet sind.

21. Verfahren nach einem der Ansprüche 13 bis 20,
**dadurch gekennzeichnet,**
**dass** die den Suchbegriff beinhalten bzw. betreffen Dokumente (17, 18) anhand der in einer Datenbank (4) enthaltenen Informationen ermittelt werden, wobei die Datenbank (4) gemäß einem der Ansprüche 1 bis 4 oder 9 erstellt wurde.

22. System zum Suchen und Recherchieren von mindestens einen vorgegebenen Suchbegriff betreffenden Dokumenten (17, 18) innerhalb eines Datenraums (15, 16), aufweisend
- eine Suchmaschine, welche auf die Eingabe eines Suchbegriffs hin nach in dem Datenraum (15, 16) enthaltenen Dokumenten (17, 18) sucht, welche den Suchbegriff beinhalten bzw. betreffen, sowie
- eine Ausgabevorrichtung (8), über welche zumindest ein Teil der von der Suchmaschine gefundenen Dokumente (17, 18) zur Verfügung gestellt wird,
- Ranking-Mittel (6), welche die Qualität jedes zur Verfügung gestellten Dokuments (17, 18) bewerten und jeweils einen zugehörigen Qualitätswert erstellen, der von der Ausgabevorrichtung (8) ebenfalls ausgegeben und/oder bei der Darstellung der zur Verfügung gestellten Dokumente (17, 18) berücksichtigt wird,
**dadurch gekennzeichnet,**
**dass** die Ranking-Mittel (6) bei der Erstellung des Qualitätswerts die Relevanz bzw. Zuverlässigkeit der das Dokument (17, 18) zur Verfügung stellenden Quelle berücksichtigen.

23. System nach Anspruch 22,
**dadurch gekennzeichnet,**
**dass** die Ranking-Mittel (6) bei der Erstellung des Qualitätswerts den Autor des Dokuments (17, 18) berücksichtigen.

24. System nach Anspruch 22 oder 23,
**dadurch gekennzeichnet,**
**dass** die Ranking-Mittel (6) bei der Erstellung des Qualitätswerts die Aktualität bzw. den Zeitpunkt der erstmaligen Verfügbarkeit des Dokuments (17, 18) berücksichtigen.

25. System nach einem der Ansprüche 22 bis 24,
**dadurch gekennzeichnet,**
**dass** die Ranking-Mittel (6) bei der Erstellung des Qualitätswerts die Position des Suchbegriffs innerhalb des gesamten Dokuments (17, 18) berücksichtigen.

26. System nach einem der Ansprüche 22 bis 25,
**dadurch gekennzeichnet,**
**dass** die Ranking-Mittel (6) bei der Erstellung des Qualitätswerts berücksichtigen, in welchem Maße das Dokument (17, 18) den inhaltlichen Vorgaben eines Themengebiets, dem das Dokument (17, 18) zugeordnet wurde, entspricht.

27. System nach einem der Ansprüche 22 bis 26,
**dadurch gekennzeichnet,**
**dass** die Ranking-Mittel (6) den Qualitätswert durch eine Kombination von zumindest zwei Einzelfaktoren bilden, wobei die Gewichtungsparameter für diese Faktoren wählbar sind.

28. Verfahren zum Suchen und Recherchieren von mindestens einen vorgegebenen Suchbegriff betreffenden Dokumenten (17, 18) innerhalb eines Datenraums (15, 16), wobei nach der Eingabe eines Suchbegriffs in dem Datenraum (15, 16) enthaltene Dokumente (17, 18), welche den Suchbegriff beinhalten bzw. betreffen, erfaßt und zumindest ein Teil der erfaßten Dokumente (17, 18) einem Benutzer zur Verfügung gestellt werden,
**dadurch gekennzeichnet,**
**dass** zu jedem zur Verfügung gestellten Dokument (17, 18) eine Zusammenfassung erstellt und angezeigt wird.

29. Verfahren nach Anspruch 28,
**dadurch gekennzeichnet,**
**dass** die Zusammenfassung auf Basis der den Suchbegriff umgebenden Daten innerhalb des Dokuments (17, 18) erstellt wird.

30. Verfahren nach Anspruch 28,
**dadurch gekennzeichnet,**
**dass** die Zusammenfassung anhand einer linguistisch-stochastischen Analyse des gesamten Dokuments (17, 18) erstellt wird.

31. Verfahren nach Anspruch 30,
**dadurch gekennzeichnet,**
**dass** der Komprimierungsfaktor beim Erstellen der Zusammenfassung wählbar ist.

32. Verfahren nach einem der Ansprüche 28 bis 31,
**dadurch gekennzeichnet,**
**dass** zu jedem zur Verfügung gestellten Dokument (17, 18) ferner ein Qualitätswert erstellt wird, der ebenfalls ausgegeben und/oder bei der Darstellung der zur Verfügung gestellten Dokumente (17, 18) berücksichtigt wird.

33. Verfahren nach Anspruch 32,
**dadurch gekennzeichnet,**
**dass** bei der Erstellung des Qualitätswerts die Relevanz bzw. Zuverlässigkeit der das Dokument (17, 18) zur Verfügung stellenden Quelle berücksichtigt wird.

34. System zum Suchen und Recherchieren von mindestens einen vorgegebenen Suchbegriff betreffenden Dokumenten (17, 18) innerhalb eines Datenraums (15, 16), aufweisend
- eine Suchmaschine, welche auf die Eingabe eines Suchbegriffs hin nach in dem Datenraum (15, 16) enthaltenen Dokumenten (17, 18) sucht, welche den Suchbegriff beinhalten bzw. betreffen, sowie
- eine Ausgabevorrichtung (8), über welche zumindest ein Teil der von der Suchmaschine gefundenen Dokumente (17, 18) zur Verfügung gestellt wird,
**gekennzeichnet durch**
Zusammenfassungs-Mittel (7), welche zu jedem zur Verfügung gestellten Dokument (17, 18) eine Zusammenfassung erstellen, die von der Ausgabevorrichtung (8) ebenfalls zur Verfügung gestellt wird.

35. System nach Anspruch 34,
**dadurch gekennzeichnet,**
**dass** die Zusammenfassungs-Mittel (7) die Zusammenfassung auf Basis der den Suchbegriff umgebenden Daten innerhalb des Dokuments (17, 18) erstellen.

36. Verfahren nach Anspruch 34,
**dadurch gekennzeichnet,**
**dass** die Zusammenfassungs-Mittel (7) die Zusammenfassung anhand einer linguistisch-stochastischen Analyse des gesamten Dokuments (17, 18) erstellen.

37. Verfahren nach Anspruch 36,
**dadurch gekennzeichnet,**
**dass** der Komprimierungsfaktor beim Erstellen der Zusammenfassung wählbar ist.
